(19) Europäisches Patentamt
European Patent Office
Office européen des brevets

(11) EP 1 622 453 B1

(12) **EUROPÄISCHE PATENTSCHRIFT**

(45) Veröffentlichungstag und Bekanntmachung des Hinweises auf die Patenterteilung:
**11.05.2011 Patentblatt 2011/19**

(21) Anmeldenummer: **04728352.8**

(22) Anmeldetag: **20.04.2004**

(51) Int Cl.:
***A01N 43/78*** *(2006.01)*

(86) Internationale Anmeldenummer:
**PCT/EP2004/004165**

(87) Internationale Veröffentlichungsnummer:
**WO 2004/095929 (11.11.2004 Gazette 2004/46)**

(54) **WIRKSTOFFKOMBINATIONEN MIT NEMATIZIDEN, INSEKTIZIDEN UND FUNGIZIDEN EIGENSCHAFTEN BASIEREND AUF TRIFLUORBUTENYL-VERBINDUNGEN**

ACTIVE SUBSTANCE COMBINATIONS THAT HAVE NEMATICIDAL, INSECTICIDAL, AND FUNGICIDAL PROPERTIES AND ARE BASED ON TRIFLUOROBUTENYL COMPOUNDS

COMBINAISONS DE MATIERE ACTIVE A PROPRIETES NEMATICIDES, INSECTICIDES ET FONGICIDES, A BASE DE COMPOSES DE TRIFLUOROBUTENYLE

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.05.2003 DE 10319591**

(43) Veröffentlichungstag der Anmeldung:
**08.02.2006 Patentblatt 2006/06**

(73) Patentinhaber: **MAKHTESHIM CHEMICAL WORKS LIMITED**
**84100 Beer Sheva (IL)**

(72) Erfinder:
- **ANDERSCH, Wolfram**
  **51468 Bergisch Gladbach (DE)**
- **WACHENDORFF-NEUMANN, Ulrike**
  **56566 Neuwied (DE)**
- **KRAUS, Anton**
  **42799 Leichlingen (DE)**

(74) Vertreter: **Modiano, Micaela Nadia et al**
**Modiano Josif Pisanty & Staub Ltd**
**Thierschstrasse 11**
**80538 München (DE)**

(56) Entgegenhaltungen:
**WO-A-01/02378 WO-A-03/029231**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 622 453 B1

## Beschreibung

Die vorliegende Erfindung betrifft neue Wirkstoffkombinationen, die aus bekannten heterocyclischen Trifluorbutenylen einerseits und bekannten fungiziden Wirkstoffen andererseits bestehen und sehr gut zur Bekämpfung von tierischen Schädlingen wie Insekten und Nematoden sowie zur Bekämpfung von Pilzen geeignet sind.

Es ist bereits bekannt, dass bestimmte heterocyclische Trifluorbutenyle nematizide Eigenschaften besitzen (WO 01/02378 A1). Eine Wirksamkeit dieser Stoffe gegen Insekten oder Pilze wird nicht berichtet.

Ferner ist bekannt, dass zahlreiche Azol-Derivate, aromatische Carbonsäure-Derivate, Morpholin-Verbindungen und andere Heterocyclen zur Bekämpfung von Pilzen eingesetzt werden können (vgl. K.H. Büchel "Pflanzenschutz und Schädlingsbekämpfung" Seiten 87, 136, 141 und 146 bis 153, Georg Thieme Verlag, Stuttgart 1977; C. D. S. Thomlin (Editor): "The Pesticide Manual", Eleventh Edition, British Crop Protection Council, Farnham, Surrey, 1997). Die Wirkung der betreffenden Stoffe ist aber bei niedrigen Aufwandmengen und/oder hinsichtlich ihres Spektrums nicht immer befriedigend.

Es wurde nun gefunden, dass Wirkstoffkombinationen umfassend heterocyclische Trifluorbutenyle der Formel (I)

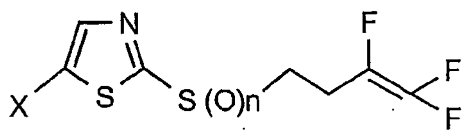

(I)

in welcher
X für Halogen, und
n für 0, 1 oder 2 steht,
("Wirkstoffe der Gruppe 1 ")
und
zumindest einen Wirkstoff aus den folgenden Klassen von Fungiziden,

**Aliphatische, Stickstoff enthaltende Fungizide**: Butylamine, Cymoxanil, Dodicin, Dodine, Guazatine, Iminoctadine;

**Amide:** Carpropamid, Chloraniformethan, Clozylacon, Cyazofamid, Cyflufenamid, Diclocymet, Ethaboxam, Fenoxanil, Flumetover, Furametpyr, Prochloraz, Quinazamid, Silthiofam, Triforine, **Aminosäuren,** wie z.B. Benalaxyl, Benalaxyl-M Furalaxyl, Metalaxyl, Metalaxyl-M, Pefurazoate, **Benzamide,** wie z.B. Benzohydroxamic acid, Tioxymid, Trichlamide, Tricyclamide, Zarilamid, Zoxamide, **Furamide,** wie z.B. Cyclafuramid, Furmecyclox, **Phenylsulfamide,** wie z.B. Dichlofluanid, Tolylfluanid, **Valinamide,** wie z.B. Benthiavalicarb, Iprovalicarb, **Anilide,** wie z.B. Benalaxyl, Benalaxyl-M, Boscalid, Carboxin, Fenhexamid, Metalaxyl, Metalaxyl-M, Metsulfovax, Ofurace, Oxadixyl, Oxycarboxin, Pyracarbolid, Thifluzamide, Tiadinil, Benzanilide, wie z.B. Benodanil Flutolanil Mebenil Mepronil Salicylanilide Tecloftalam Furanilide, wie z.B. Fenfuram, Furalaxyl, Furcarbanil, Methfuroxam, Sulfonanilide, wie z.B. Flusulfamide;

**Antibiotische Funigizide:** Aureofungin, Blasticidin-S, Capsimycin, Cycloheximide, Griseofulvin, Irumamycin, Kasugamycin, Mildiomycin, Natamycin, Polyoxins, Polyoxorim, Streptomycin, Validamycin, Strobine, wie z.B. Azoxystrobin, Dimoxystrobin, Fluoxastrobin, Kresoxim-Methyl, Metominostrobin, Orysastrobin, Picoxystrobin, Pyraclostrobin, Trifloxystrobin;

**Aromatische Fungizide:** Biphenyl, Chloroneb, Chlorothalonil, Cresol, Dicloran, Hexachlorobenzene, Pentachlorophenol, Quintozene, Sodium Pentachlorophenoxide, Tecnazene;

**Benzimidazole:** Benomyl, Carbendazim, Chlorfenazole, Cypendazole, Debacarb, Fuberidazole, Mecarbinzid, Rabenzazole, Thiabendazole;

**Benzothiazole:** Bentaluron, Chlobenthiazone, TCMTB;

**Diphenyl Fungizide:** Bithionol, Dichlorophen, Diphenylamine;

**Carbamate:** Benthiavalicarb, Furophanate, Iprovalicarb, Propamocarb, Thiophanate, Thiophanate-Methyl, **Benzimidazolylearbamate,** wie z.B. Benomyl, Carbendazim, Cypendazole, Debacarb, Mecarbinzid, **Carbanilate,** wie z.B. Diethofencarb;

**Conazole: Conazole (Imidazole),** wie z.B. Climbazole, Clotrimazole Imazalil, Oxpoconazole, Prochloraz, Triflumizole, **Conazole (Triazole),** wie z.B. Azaconazole, Bromuconazole, Cyproconazole, Diclobutrazol, Difenoconazole, Diniconazole, Diniconazole-M, Epoxiconazole, Etaconazole, Fenbuconazole, Fluquinconazole, Flusilazole, Flutriafol, Furconazole, Furconazole-Cis, Hexaconazole, Imibenconazole, Ipconazole, Metconazole, Myclobutanil, Penconazole, Propiconazole, Prothioconazole, Quinconazole, Simeconazole, Tebuconazole, Tetraconazole, Triadimefon, Triadimenol, Triticonazole, Uniconazole, Uniconazole-P;

**Kupfer Fungizide:** Bordeaux Mixture, Burgundy Mixture, Cheshunt Mixture, Copper acetate, Copper carbonate (Basic) Copper hydroxide, Copper naphthenate, Copper oleate, Copper oxychloride, Copper sulfate, Copper sulfate (Basic) Copper zinc chromate, Cufraneb, Cuprobam, Cuprous oxide, Mancopper, Oxine Copper;
**Dicarboximide:** Famoxadone, Fluoroimide, **Dichlorophenyl-dicarboximide,** wie z.B. Chlozolinate, Dichlozoline, Iprodione, Isovaledione, Myclozolin, Procymidone, Vinclozolin, **Phthalimide,** wie z.B. Captafol, Captan, Ditalimfos, Folpet, Thiochlorfenphim;
**Dinitrophenole:** Binapacryl, Dinobuton, Dinocap, Dinocap-4, Dinocap-6, Dinocton, Dinopenton, Dinosulfon, Dinoterbon, DNOC;
**Dithiocarbamate:** Azithiram, Carbamorph, Cufraneb, Cuprobam, Disulfiram, Ferbam, Metam, Nabam, Tecoram, Thiram, Ziram, Cyclische **Dithiocarbamate,** wie z.B. Dazomet, Etem, Milneb, **Polymere Dithiocarbamate,** wie z.B. Mancopper, Mancozeb, Maneb, Metiram, Polycarbamate, Propineb, Zineb;
**Imidazole:** Cyazofamid, Fenamidone, Fenapanil, Glyodin, Iprodione, Isovaledione, Pefurazoate, Triazoxide, (siehe auch: Conazole (Imidazole));
**Morpholine:** Aldimorph, Benzamorf, Carbamorph, Dimethomorph, Dodemorph, Fenpropimorph, Flumorph, Tridemorph;
**Oreanophosphor Fungizide:** Ampropylfos, Ditalimfos, Edifenphos, Fosetyl, Hexylthiofos, Iprobenfos, Phosdiphen, Pyrazophos, Tolclofos-Methyl, Triamiphos;
**Organotine:** Decafentin, Fentin, Tributyltin oxide;
**Oxathiine:** Carboxin, Oxycarboxin, Oxyfenthiin;
**Oxazole:** Chlozolinate, Dichlozoline, Drazoxolon, Famoxadone, Hymexazol, Metazoxolon, Myclozolin, Oxadixyl, Vinclozolin;
**Pyridine:** Boscalid, Buthiobate, Dipyrithione, Fluazinam, Pyridinitril, Pyrifenox, Pyroxychlor, Pyroxyfur;
**Pyrimidine:** Andoprim, Bupirimate, Cyprodinil, Diflumetorim, Dimethirimol, Ethirimol, Fenarimol, Ferimzone, Meferimzone, Mepanipyrim, Nuarimol, Pyrimethanil, Triarimol;
**Pyrrole:** Fenpiclonil, Fludioxonil, Fluoroimide, Pyrrolnitrine;
**Quinoline:** Ethoxyquin, Halacrinate, 8-Hydroxyquinoline Sulfate, Quinacetol, Quinoxyfen;
**Quinone:** Benquinox, Chloranil, Dichlone, Dithianon;
**Quinoxaline:** Chinomethionat, Chlorquinox, Thioquinox;
**Thiazole:** Ethaboxam, Etridiazole, Metsulfovax, Octhilinone, Thiabendazole, Thiadifluor, Thifluzamide;
**Thiocarbamate:** Methasulfocarb, Prothiocarb;
**Thiophene:** Ethaboxam, Silthiofam;
**Triazine:** Anilazine;
**Triazole:** Bitertanol, Fluotrimazole, Triazbutil (siehe auch: Conazole (Triazoles));
**Harnstoffe:** Bentaluron, Pencycuron, Quinazamid;
**nicht klassifizierte Fungizide:** Acibenzolar, Acypetacs, Allylalkohol, Benzalkonium Chloride, Benzamacril, Bethoxazin, Carvone, Chloropicrin, Cyprofuram, DBCP, Dehydroacetic Acid, Diclomezine, Diethylpyrocarbonate, Fenaminosulf, Fenitropan, Fenpropidin, Formaldehyd, Hexachlorobutadiene, Isoprothiolane, Methylbromid, Methylisothiocyanat, Metrafenone, Nicobifen, Nitrostyrene, Nitrothal-Isopropyl, OCH, Oxolinix acid, 2-Phenylphenol, Phthalide, Piperalin, Probenazole, Proquinazid, Pyroquilon, Sodium Orthophenylphenoxide, Spiroxamine, Sultropen, Thicyofen, Tricyclazole, Zinc Naphthenate, (2S)-N-[2-[4-[[3-(4-chlorophenyl)-2-propynyl]oxy]-3-methoxyphenyl]ethyl]-3-methyl- 2-[(methylsulfonyl) amino]-butanamide; 1-(1-naphthalenyl)-1H-pyrrole-2,5-dione; 2,3,5,6-tetrachloro-4-(methylsulfonyl)-pyridine; 2-amino-4-methyl-N-phenyl-5-thiazolecarboxamide; 2-chloro-N-(2,3-dihydro-1,1,3-trimethyl-1H-inden-4-yl)-3-pyridincarboxamide; 3,4,5-trichloro-2,6-pyridinedicarbonitrile; cis-1-(4-chlorophenyl)-2-(1H-1,2,4-triazole-1-yl)-cycloheptanol; methyl 1-(2,3-dihydro-2,2-dimethyl-1H-inden-1-yl)-1H-imidazole-5-carboxylate; monopotassium carbonate; N-(6-methoxy-3-pyridinyl)-cyclopropanecarboxamide; N-butyl-8-(1,1-dimethylethyl)-1-oxaspiro[4.5]decan-3-amine;
("Wirkstoffe der Gruppe 2")
sehr gute nematizide, insektizide und/oder fungizide Eigenschaften besitzen.

Überraschenderweise ist die nematizide, fungizide bzw. insektizide Wirkung der erfindungsgemäßen Wirkstoffkombination wesentlich höher als die Summe der Wirkungen der einzelnen Wirkstoffe. Es liegt ein nicht vorhersehbarer echter synergistischer Effekt vor und nicht nur eine Wirkungsergänzung.

Die erfindungsgemäßen Wirkstoffkombinationen enthalten neben mindestens einem Wirkstoff der Formel (I) mindestens einen Wirkstoff der Gruppe 2.

Bevorzugt sind Wirkstoffkombinationen wie vorstehend beschrieben, die als Wirkstoff der Gruppe 1 zumindest eine Verbindung der Formel (I) enthalten, in welcher
X für Fluor, Chlor oder Brom steht, und
n für 0 oder 2 steht.

Besonders bevorzugt sind weiterhin Wirkstoffkombinationen wie vorstehend beschrieben, die als Wirkstoff der Gruppe 1 zumindest eine Verbindung der Formel (I) enthalten, in welcher
X für Fluor oder Chlor steht, und

n für 2 steht.

Gegenstand der vorliegenden Erfindung sind insbesondere Wirkstoffkombinationen wie vorstehend beschrieben, die neben zumindest einem Wirkstoff aus der Gruppe 1 gemäß einer der vorstehenden Definitionen zumindest einen Wirkstoff der Gruppe 2 aus einer der folgenden, vorstehend definierten Klassen von Fungiziden umfassen: Amide, Strobine, Conazole, Dicarboximide, Organophosphor Fungizide, Carbamate und Harnstoffderivate.

Insbesondere bevorzugt sind Wirkstoffkombinationen wie vorstehend beschrieben, die eineVerbindung der Formel (IA) gemäß der vorstehend definierten Wirkstoffen der Gruppe 1

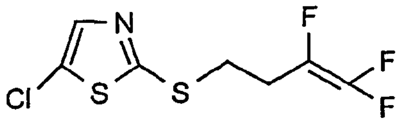 (IA),

oder eine Verbindung der Formel (IB) gemäß der vorstehend definierten Wirkstoffen der Gruppe 1

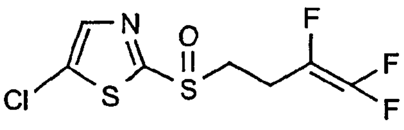 (IB),

oder eine Verbindung der Formel (IC) gemäß der vorstehend definierten Wirkstoffen der Gruppe 1

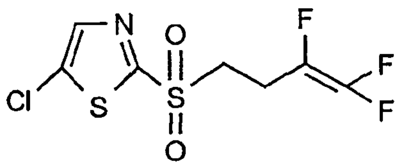 (IC)

umfassen.

Bevorzugt sind Wirkstoffkombinationen aus jeweils einem der Wirkstoffe der Formel (IA), (IB) oder (IC), und jeweils einem der folgenden Wirkstoffe aus der Klasse der Amide, Strobine, Conazole, Dicarboximide, Organophosphor Fungizide, Carbamate oder Harnstoffderivate:

Tolylfluanid, Carpropamid, Chloraniformethan, Clozylacon, Cyazofamid, Cyflufenamid, Diclocymet, Ethaboxam, Fenoxanil, Flumetover, Furametpyr, Prochloraz, Quinazamid, Silthiofam, Triforine, Benalaxyl, Benalaxyl-M Furalaxyl, Metalaxyl, Metalaxyl-M, Pefurazoate, Benzohydroxamic acid, Tioxymid, Trichlamide, Tricyclamide, Zarilamid, Zoxamide, Cyclafuramid, Furmecyclox, Dichlofluanid, Benthiavalicarb, Iprovalicarb, Benalaxyl, Benalaxyl-M, Boscalid, Carboxin, Fenhexamid, Metalaxyl, Metalaxyl-M, Metsulfovax, Ofurace, Oxadixyl, Oxycarboxin, Pyracarbolid, Thifluzamide, Tiadinil, Benzanilide, wie z.B. Benodanil, Flutolanil, Mebenil, Mepronil, Salicylanilide, Tecloftalam; Furanilide, wie z.B. Fenfuram, Furalaxyl, Furcarbanil, Methfuroxam, Flusulfamide ("Amide");

Trifloxystrobin, Fluoxastrobin, Azoxystrobin, Dimoxystrobin, Kresoxim-Methyl, Metominostrobin, Orysastrobin, Picoxystrobin, Pyraclostrobin, ("Strobine");

Tebuconazole, Prothioconazole, Prochloraz, Climbazole, Clotrimazole Imazalil, Oxpoconazole, Triflumizole, Azaconazole, Bromuconazole, Cyproconazole, Diclobutrazol, Difenoconazole, Diniconazole, Diniconazole-M, Epoxiconazole, Etaconazole, Fenbuconazole, Fluquinconazole, Flusilazole, Flutriafol, Furconazole, Furconazole-Cis, Hexaconazole, Imibenconazole, Ipconazole, Metconazole, Myclobutanil, Penconazole, Propiconazole, Quinconazole, Simeconazole, Tetraconazole, Triadimefon, Triadimenol, Triticonazole, Uniconazole, Uniconazole-P ("Conazole").

Iprodione, Famoxadone, Fluoroimide, Chlozolinate, Dichlozoline, Isovaledione, Myclozolin, Procymidone, Vinclozolin, Captafol, Captan, Ditalimfos, Folpet, Thiochlorfenphim ("Dicarboximide");

Fosetyl, Ampropylfos, Ditalimfos, Edifenphos, Hexylthiofos, Iprobenfos, Phosdiphen, Pyrazophos, Tolclofos-Methyl, Triamiphos ("Organophosphor Fungizide");

Benthiavalicarb, Furophanate, Iprovalicarb, Propamocarb, Thiophanate, Thiophanate-Methyl, Benomyl, Carbendazim, Cypendazole, Debacarb, Mecarbinzid, Diethofencarb ("Carbamate");

Pencycuron, Bentaluron, Quinazamid ("Harnstoffe"),

oder einem der Wirkstoffe Hymexazol (ein Oxazol) oder Fludioxonil (ein Pyrrol).

Insbesondere bevorzugt sind Wirkstoffkombinationen, die einen Wirkstoff der Formel (IC) (Wirkstoff der Gruppe 1) und einen der folgenden Wirkstoffe aus der Klasse der Amide, Strobine, Conazole, Dicarboximide, Organophosphor Fungizide oder Harnstoffderivate umfassen:

Tolylfluanid, Carpropamid, Chloraniformethan, Clozylacon, Cyazofamid, Cyflufenamid, Diclocymet, Ethaboxam, Fenoxanil, Flumetover, Furametpyr, Prochloraz, Quinazamid, Silthiofam, Triforine, Benalaxyl, Benalaxyl-M Furalaxyl, Metalaxyl, Metalaxyl-M, Pefurazoate, Benzohydroxamic acid, Tioxymid, Trichlamide, Tricyclamide, Zarilamid, Zoxamide, Cyclafuramid, Furmecyclox, Dichlofluanid, Benthiavalicarb, Iprovalicarb, Benalaxyl, Benalaxyl-M, Boscalid, Carboxin, Fenhexamid, Metalaxyl, Metalaxyl-M, Metsulfovax, Ofurace, Oxadixyl, Oxycarboxin, Pyracarbolid, Thifluzamide, Tiadinil, Benzanilide, wie z.B. Benodanil Flutolanil Mebenil Mepronil Salicylanilide Tecloftalam Furanilide, wie z.B. Fenfuram, Furalaxyl, Furcarbanil, Methfuroxam, Flusulfamide ("Amide");

Trifloxystrobin, Fluoxastrobin, Azoxystrobin, Dimoxystrobin, Kresoxim-Methyl, Metominostrobin, Orysastrobin, Picoxystrobin, Pyraclosirobin ("Strobine");

Tebuconazole, Prochloraz, Climbazole, Clotrimazole Imazalil, Oxpoconazole, Triflumizole, Azaconazole, Bromuconazole, Cyproconazole, Diclobutrazol, Difenoconazole, Diniconazole, Diniconazole-M, Epoxiconazole, Etaconazole, Fenbuconazole, Fluquinconazole, Flusilazole, Flutriafol, Furconazole, Furconazole-Cis, Hexaconazole, Imibenconazole, Ipconazole, Metconazole, Myclobutanil, Penconazole, Propiconazole, Prothioconazole, Quinconazole, Simeconazole, Tetraconazole, Triadimefon, Triadimenol, Triticonazole, Uniconazole, Uniconazole-P ("Conazole").

Iprodione, Famoxadone, Fluoroimide, Chlozolinate, Dichlozoline, Isovaledione, Myclozolin, Procymidone, Vinclozolin, Captafol, Captan, Ditalimfos, Folpet, Thiochlorfenphim ("Dicarboximide");

Fosetyl, Ampropylfos, Ditalimfos, Edifenphos, Hexylthiofos, Iprobenfos, Phosdiphen, Pyrazophos, Tolclofos-Methyl, Triamiphos ("Organophosphor Fungizide");

Pencycuron, Bentaluron, Quinazamid ("Harnstoffe"),

oder einem der Wirkstoffe Hymexazol oder Fludioxonil.

Innerhalb der vorstehend genannten bevorzugten Klasse der Conazole sind wiederum insbesondere die Triazole von Interesse. Innerhalb der vorstehend genannten bevorzugten Klasse der Dicarboximide sind wiederum insbesondere die Dichlorphenyl-dicarboximide von Interesse.

Besonders bevorzugte erfindungsgemäße Kombinationen sind in der nachfolgenden Tabelle gezeigt.

**Tabelle 1**

| Wirkstoff der Gruppe 1 | Wirkstoff der Gruppe 2 |
|---|---|
| (IA) | Fluoxastrobin 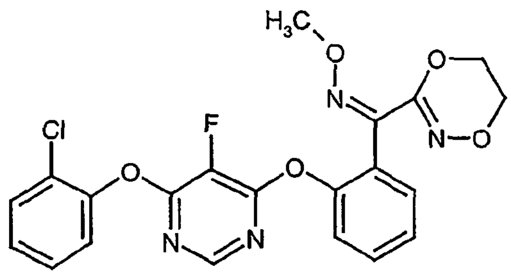 |
| (IB) | Fluoxastrobin |
| (IC) | Fluoxastrobin |
| (IA) | Fosetyl-Al 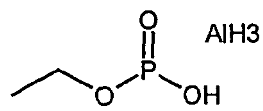 |
| (IB) | Fosetyl-Al |
| (IC) | Fosetyl-Al |
| (IA) | Fludioxonil 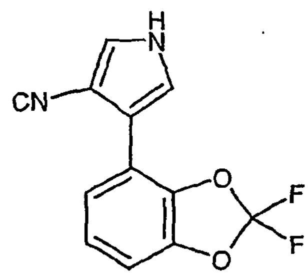 |
| (IB) | Fludioxonil |
| (IC) | Fludioxonil |
| (IA) | Iprodione 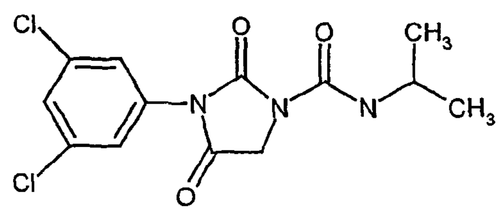 |
| (IB) | Iprodione |
| (IC) | Iprodione |

(fortgesetzt)

| Wirkstoff der Gruppe 1 | Wirkstoff der Gruppe 2 |
|---|---|
| (IA) | Pencycuron<br>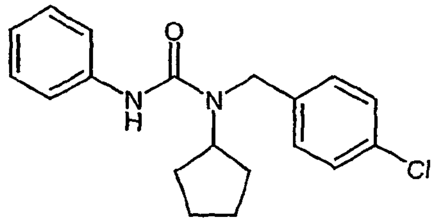 |
| (IB) | Pencycuron |
| (IC) | Pencycuron |
| (IA) | Prochloraz<br>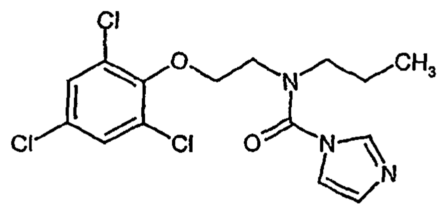 |
| (IB) | Prochloraz |
| (IC) | Prochloraz |
| (IA) | Prothioconazole<br>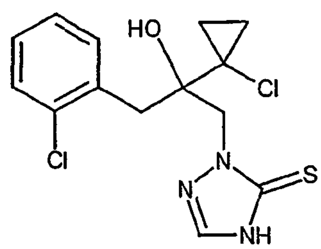 |
| (IB) | Prothioconazole |
| (IC) | Prothioconazole |
| (IA) | Tebuconazole<br>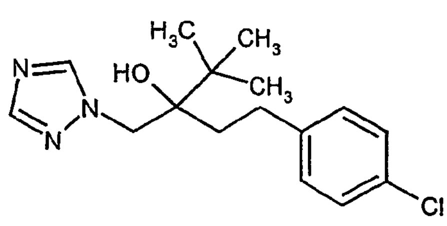 |
| (IB) | Tebuconazole |
| (IC) | Tebuconazole |

(fortgesetzt)

| Wirkstoff der Gruppe 1 | Wirkstoff der Gruppe 2 |
|---|---|
| (IA) | Tolylfluanid 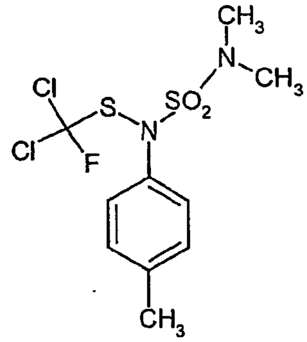 |
| (IB) | Tolylfluanid |
| (IC) | Tolylfluanid |
| (IA) | Trifloxystrobin 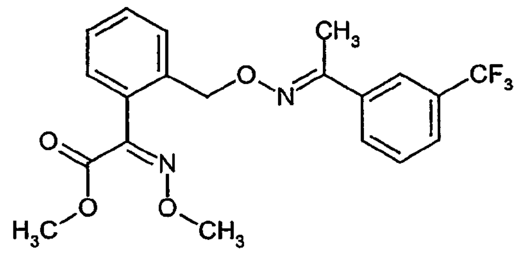 |
| (IB) | Trifloxystrobin |
| (IC) | Trifloxystrobin |

Die Wirkstoffkombinationen können darüber hinaus auch weitere fungizid, akarizid oder insektizid wirksame Zumischkomponenten enthalten.

Wenn die Wirkstoffe in den erfmdungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im Allgemeinen enthalten die erfindungsgemäßen Kombinationen Wirkstoffe der Formel (I) und einen Mischpartner aus der Gruppe 2 in den in der nachfolgenden Tabelle beispielhaft angegeben bevorzugten und besonders bevorzugten Mischungsverhältnissen:

• die Mischungsverhältnisse basieren auf Gewichtsverhältnissen. Das Verhältnis ist zu verstehen als Wirkstoff der Formel (I):Mischpartner **Tabelle 2:**

| Mischpartner | bevorzugtes Mischungsverhältnis | besonders bevorzugtes Mischungsverhältnis |
|---|---|---|
| Fluquinconazol | 1000:1 bis 1:5 | 500:1 bis 1:1 |
| Tebuconazol | 1000:1 bis 1:5 | 500:1 bis 1:1 |
| Bitertanol | 1000:1 bis 1:5 | 500:1 bis 1:1 |
| Triadimenol | 1000:1 bis 1:5 | 500:1 bis 1:1 |
| Triadimefon | 1000:1 bis 1:5 | 500:1 bis 1:1 |
| Difenoconazol | 1000:1 bis 1:5 | 500:1 bis 1:1 |
| Flusilazol | 1000:1 bis 1:5 | 500:1 bis 1:1 |
| Prochloraz | 1000:1 bis 1:5 | 500:1 bis 1:1 |

(fortgesetzt)

| Mischpartner | bevorzugtes Mischungsverhältnis | besonders bevorzugtes Mischungsverhältnis |
|---|---|---|
| Penconazol | 1000:1 bis 1:5 | 500:1 bis 1:1 |
| 2-(1-Chlor-cyclopropyl)-1-(2-chlorphenyl)-3-(5-mercapto-1,2,4-triazol-1-yl)-propan-2-ol | 1000:1 bis 1:5 | 500:1 bis 1:1 |
| Kresoximmethyl | 1000:1 bis 1:5 | 500:1 bis 1:1 |
| Azoxystrobin | 1000:1 bis 1:5 | 500:1 bis 1:1 |
| Trifloxystrobin | 1000:1 bis 1:5 | 500:1 bis 1:1 |
| Picoxystrobin | 1000:1 bis 1:5 | 500:1 bis 1:1 |
| 3-{1-[4-<2-Chlorphenoxy>-5-fluorpyrimid-6-yloxy)-phenyl]-1-(methoximino)-methyl}-5,6-dihydro-1,4,2-dioxazin | 1000:1 bis 1:5 | 500:1 bis 1:1 |
| Maneb | 100:1 bis 1:10 | 50:1 bis 1:1 |
| Propineb | 100:1 bis 1:10 | 50:1 bis 1:1 |
| Mancozeb | 100:1 bits 1:10 | 50:1 bis 1:1 |
| Captan | 100:1 bis 1:10 | 50:1 bis 1:1 |
| Folpet (Phaltan) | 100:1 bis 1:10 | 50:1 bis 1:1 |
| Dichlofluanid | 200:1 bis 1:10 | 100:1 bis 1:2 |
| Tolylfluanid | 200:1 bis 1:10 | 100:1 bis 1:2 |
| Famoxadon | 100:1 bis 1:10 | 50:1 bis 1:1 |
| Fenamidon | 100:1 bis 1:10 | 50:1 bis 1:1 |
| Carpropamid | 100:1 bis 1:10 | 50:1 bis 1:1 |
| Iprovalicarb | 100:1 bis 1:10 | 50:1 bis 1:1 |
| Procymidon | 100:1 bis 1:10 | 50:1 bis 1:1 |
| Vinclozolin | 100:1 bis 1:10 | 50:1 bis 1:1 |
| Iprodion | 100:1 bis 1:10 | 50:1 bis 1:1 |
| Cyprodinil | 100:1 bis 1:10 | 50:1 bis 1:1 |
| Cyamidazosulfamid | 100:1 bis 1:10 | 50:1 bis 1:1 |
| 1-(3,5-Dimethylisoxazol-4-sulfonyl)-2-chlor- 6,6-difluor-[1,3]-dioxolo-[4,3f]-benzimidazol | 100:1 bis 1:10 | 50:1 bis 1:1 |
| Pyrimethanil | 100:1 bis 1:10 | 50:1 bis 1:1 |
| Mepanipyrim | 100:1 bis 1:10 | 50:1 bis 1:1 |
| Spiroxamin | 100:1 bis 1:10 | 50:1 bis 1:1 |
| Chlorothalonil | 1000:1 bis 1:5 | 500:1 bis 1:1 |
| Iminoctadien-triacetat | 1000:1 bis 1:5 | 500:1 bis 1:1 |
| Fludioxonil | 1000:1 bis 1:5 | 500:1 bis 1:1 |
| Acibenzolar-S-methyl (Bion) | 1000:1 bis 1:5 | 500:1 bis 1:1 |
| Dimetomorph | 1000:1 bis 1:5 | 500:1 bis 1:1 |

(fortgesetzt)

| Mischpartner | bevorzugtes Mischungsverhältnis | besonders bevorzugtes Mischungsverhältnis |
|---|---|---|
| Cymoxanil | 1000:1 bis 1:5 | 500:1 bis 1:1 |
| Fosetyl-A1 | 1000:1 bis 1:5 | 500:1 bis 1:1 |
| Pencycuron | 1000:1 bis 1:5 | 500:1 bis 1:1 |
| Fenhexamid | 1000:1 bis 1:5 | 500:1 bis 1:1 |
| Zoxamid | 1000:1 bis 1:5 | 500:1 bis 1:1 |
| Carbendazim | 1000:1 bis 1:5 | 500:1 bis 1:1 |
| Rabcide | 1000:1 bis 1:5 | 500:1 bis 1:1 |
| Coratop | 200:1 bis 1:10 | 100:1 1 bis 1:2 |
| Chinomethionat | 200:1 bis 1:10 | 100:1 bis 1:2 |
| Fluazinam | 100:1 bis 1:10 | 50:1 bis 1:1 |
| Metalaxyl-M | 100:1 bis 1:10 | 50:1 bis 1:1 |
| Schwefel | 100:1 bis 1:100 | 10:1 bis 1:10 |
| Kupfer | 100:1 bis 1:100 | 10:1 bis 1:10 |

Fungizide lassen sich im Pflanzenschutz zur Bekämpfung von Plasmodiophoromycetes, Oomycetes, Chytridiomycetes, Zygomycetes, Ascomycetes, Basidiomycetes und Deuteromycetes einsetzen.
Beispielhaft, aber nicht begrenzend, seien einige Erreger von pilzlichen und bakteriellen Erkrankungen, die unter die oben aufgezählten Oberbegriffe fallen, genannt:

Xanthomonas-Arten, wie beispielsweise *Xanthomonas campestris pv. oryzae;* Pseudomonas-Arten, wie beispielsweise *Pseudomonas syingae pv. lachrymans;* Erwinia-Arten, wie beispielsweise *Erwinia amylovora;* Pythium-Arten, wie beispielsweise *Pythium ultimum;* Phytophthora-Arten, wie beispielsweise *Phytophthora infestans;* Pseudoperonospora-Arten, wie beispielsweise *Pseudoperonospora humuli* oder *Pseudoperonospora cubensis;* Plasmopara-Arten, wie beispielsweise *Plasmopara viticola;* Bremia-Arten, wie beispielsweise *Bremia lactucae;* Peronospora-Arten, wie beispielsweise *Peronospora pisi* oder *P. brassicae;* Erysiphe-Arten, wie beispielsweise *Erysiphe graminis;* Sphaerotheca-Arten, wie beispielsweise *Sphaerotheca fuliginea;* Podosphaera-Arten, wie beispielsweise *Podosphaera leucotricha;* Venturia-Arten, wie beispielsweise *Yenturia inaequalis;* Pyrenophora-Arten, wie beispielsweise *Pyrenophora teres* oder *P. graminea* (Konidienform: Drechslera, Syn: Helminthosporium); Cochliobolus-Arten, wie beispielsweise *Cochliobolus sativus* (Konidienform: Drechslera, Syn: Helminthosporium); Uromyces-Arten, wie beispielsweise *Uromyces appendiculatus;* Puccinia-Arten, wie beispielsweise *Puccinia recondita;* Sclerotinia-Arten, wie beispielsweise *Sclerotinia sclerotiorum;* Tilletia-Arten, wie beispielsweise *Tilletia caries;* Ustilago-Arten, wie beispielsweise *Ustilago nuda* oder *Ustilago avenae;* Pellicularia-Arten, wie beispielsweise *Pellicularia sasakii;* Pyricularia-Arten, wie beispielsweise *Pyricularia oryzae;* Fusarium-Arten, wie beispielsweise *Fusarium culmorum;* Botrytis-Arten, wie beispielsweise *Botrytis cinerea;* Septoria-Arten, wie beispielsweise *Septoria nodorum;* Leptosphaeria-Arten, wie beispielsweise *Leptosphaeria nodorum;* Cercospora-Arten, wie beispielsweise *Cercospora canescens;* Alternaria-Arten, wie beispielsweise *Alternaria brassicae;* Pseudocercosporella-Arten, wie beispielsweise *Pseudocereosporella herpotichoides.*

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.
Die erfindungsgemäßen Wirkstoffkombinationen eignen sich auch zur Steigerung des Ernteertrages. Sie sind außerdem mindertoxisch und weisen eine gute Pflanzenverträglichkeit auf.
Im Materialschutz lassen sich die erfindungsgemäßen Wirkstoffkombinationen zum Schutz von technischen Materialien gegen Befall und Zerstörung durch unerwünschte Mikroorganismen einsetzen.
Unter technischen Materialien sind im vorliegenden Zusammenhang nichtlebende Materialien zu verstehen, die für die Verwendung in der Technik zubereitet worden sind. Beispielsweise können technische Materialien, die durch erfindungsgemäße Wirkstoffkombinationen vor mikrobieller Veränderung oder Zerstörung geschützt werden sollen,

Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Wärmeübertragungsflüssigkeiten genannt, besonders bevorzugt Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffkombinationen gegen Pilze, insbesondere Schimmelpilze, holzverfärbende und holzzerstörende Pilze (Basidiomyceten) sowie gegen Schleimorganismen und Algen.

Es seien beispielsweise Mikroorganismen der folgenden Gattungen genannt:

Alternaria, wie *Alternaria tenuis,* Aspergillus, wie *Aspergillus niger,* Chaetomium, wie *Chaetomium globosum,* Coniophora, wie *Coniophora puetana,* Lentinus, wie *Lentinus tigrinus,* Penicillium, wie *Penicillium glaucum,* Polyporus, wie *Polyporus versicolor,* Aureobasidium, wie *Aureobasidium pullulans,* Sclerophoma, wie *Sclerophoma pityophila,* Trichoderma, wie *Trichoderma viride,* Escherichia, wie *Escherichia coli,* Pseudomonas, wie *Pseudomonas aeruginosa,* Staphylococcus, wie *Staphylococcus aureus.*

Die Wirkstoffkombinationen können in Abhängigkeit von ihren jeweiligen physikalischen und/oder chemischen Eigenschaften in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiernlitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent Wirkstoff, vorzugsweise zwischen 0,5 und 90 %.

Die Wirkstoffkombinationen können als solche, in Form ihrer Formulierungen oder den daraus bereiteten Anwendungsformen, wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Beim Einsatz der erfindungsgemäßen Wirkstoffkombinationen als Fungizide können die Aufwandmengen je

nach Applikationsart innerhalb eines größeren Bereiches variiert werden. Bei der Behandlung von Pflanzenteilen liegen die Aufwandmengen an Wirkstoff im Allgemeinen zwischen 0,1 und 10.000 g/ha, vorzugsweise zwischen 10 und 1.000 g/ha. Bei der Saatgutbehandlung liegen die Aufwandmengen an Wirkstoff im Allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoff im Allgemeinen zwischen 0,1 und 10.000 g/ha, vorzugsweise zwischen 1 und 5.000 g/ha.

Die zum Schutz technischer Materialien verwendeten Mittel enthalten die Wirkstoffe im Allgemeinen in einer Menge von 1 bis 95 Gew.-%, bevorzugt von 10 bis 75 Gew.-%.

Die Anwendungskonzentrationen der erfindungsgemäßen Wirkstoffkombinationen richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im Allgemeinen liegen die Anwendungskonzentrationen im Bereich von 0,001 bis 5 Gew.-%, vorzugsweise von 0,05 bis 1,0 Gew.-% bezogen auf das zu schützende Material.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfmdungsgemäße Behandlung der Pflanzen und Pflanzenteile mit den Wirkstoffen erfolgt direkt oder durch Einwirken auf deren Umgebung, Lebensraum oder Lagerraum nach den üblichen Behandlungsmethoden, z.B. durch Tauchen, Sprühen, Verdampfen, Vernebeln, Streuen, Auf streichen und bei Vermehrungsmaterial, insbesondere bei Samen, weiterhin durch ein- oder mehrschichtiges Umhüllen.

Ein synergistischer Effekt liegt bei Fungiziden, Nematiziden, Insektiziden und Akariziden immer dann vor, wenn die fungizide, nematizide, insektizide und/oder akarizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Wirkungsgrad bzw. Abtötungsgrad, ausgedrückt in % der unbehandelten Kontrolle, beim Einsatz des Wirkstoffes A in einer Konzentration von $\underline{m}$ ppm,

Y den Wirkungsgrad bzw. Abtötungsgrad, ausgedrückt in % der unbehandelten Kontrolle, beim Einsatz des Wirkstoffes B in einer Konzentration von $\underline{m}$ ppm,

E den erwarteten Wirkungsgrad bzw. Abtötungsgrad, ausgedrückt in % der unbehandelten Kontrolle, beim Einsatz

des Wirkstoffes A und B in einer Konzentration von $\underline{m}$ und $\underline{n}$ ppm bedeutet, dann ist $E = X + Y - \frac{X \cdot Y}{100}$ . .

Ist die tatsächliche fungizide bzw. nematizide, insektizide und/oder akarizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad bzw. Abtötungsgrad größer sein als der aus der oben angeführten Formel errechnete Wert für den erwarteten Wirkungsgrad (E).

## Beispiele

### Beispiel A

**Meloidogyne-Test (nematizide Wirkung)**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Gefäße werden mit Sand, Wirkstofflösung, *Meloidogyne incognita*-Ei-Larvensuspension und Salatsamen gefüllt. Die Salatsamen keimen und die Pflänzchen entwickeln sich. An den Wurzeln entwickeln sich die Gallen.

Nach der gewünschten Zeit wird die nematizide Wirkung an Hand der Gallenbildung in % bestimmt. Dabei bedeutet 100 %, dass keine Gallen gefunden wurden; 0 % bedeutet, dass die Zahl der Gallen an den behandelten Pflanzen der der unbehandelten Kontrolle entspricht. Die ermittelten Abtötungswerte verrechnet man nach der Colby-Formel.

Bei diesem Test zeigten die folgenden Wirkstoffkombinationen gemäß vorliegender Anmeldung eine synergistisch verstärkte Wirksamkeit im Vergleich zu den einzelnen angewendeten Wirkstoffen (gef.* = im Test gefundene Wirkung; ber.** = nach Colby berechnete Wirkung):

**Tabelle 3: (IC) + Prothioconazole**

| Wirkstoff | Wirkstoffkonzentration [ppm] | Abtötungsgrad [%] nach 14 Tagen |
|---|---|---|
| (IC) | 0,8 | 50 |
| Prothioconazole | 20 | 50 |
| (IC) + Prothioconazole (1:25) | 0,8 + 20 | gef.*: 80<br>ber.**: 75 |

**Tabelle 4: (IC) + Fludioxonil**

| Wirkstoff | Wirkstoffkonzentration [ppm] | Abtötungsgrad [%] nach 14 Tagen |
|---|---|---|
| (IC) | 0,8 | 50 |
| Fludioxonil | 20 | 0 |
| (IC)+Fludioxonil (1:25) | 0,8+20 | gef.*: 90<br>ber.**: 50 |

**Tabelle 5: (IC) + Trifloxystrobin**

| Wirkstoff | Wirkstoffkonzention [ppm] | Abtötungsg rad [%] nach 14 Tagen |
|---|---|---|
| (IC) | 0,8 | 50 |
| Trifloxystrobin | 20 | 0 |
| (IC)+Trifloxystrobin 1:25) | 0,8 +20 | gef.*: 60<br>ber.**: 50 |

**Beispiel B**

**Plutella-Test, sensibler Stamm (insektizide Wirkung)**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Tauchen in die Wirkstoffzubereitung der gewünschten Konzentration behandelt und mit Raupen der Kohlschabe (*Plutella xylostella,* sensibler Stamm) besetzt, solange die Blätter noch feucht sind. Nach der gewünschten Zeit wird die Abtötung in % bestimmt. Dabei bedeutet 100 %, dass alle Raupen abgetötet wurden; 0 % bedeutet, dass keine Raupen abgetötet wurden. Die ermittelten Abtötungswerte verrechnet man nach der Colby-Formel.

Bei diesem Test zeigte die folgende Wirkstoffkombination gemäß vorliegender Anmeldung eine synergistisch verstärkte Wirksamkeit im Vergleich zu den einzelnen angewendeten Wirkstoffen (gef.* = im Test gefundene Wirkung; ber.** = nach Colby berechnete Wirkung):

**Tabelle 6: (IC) + Trifloxystrobin**

| Wirkstoff | Wikstoffkonzentration [ppm] | Abtötungsgrad[%] nach 3 Tagen |
|---|---|---|
| (IC) | 100 | 0 |
| Trifloxystrobin | 100 | 15 |
| (IC) + Trifloxystrobin (1:1) | 100+100 | gef.*: 55<br>ber.**: 15 |

**Beispiel C**

**Myzelwachstumstest**

| | |
|---|---|
| Nährboden : | 39 Gewichtsteile Potatoe Dextrose Agar |
| | 5 Gewichtsteile Agar Agar |

Diese werden in 1000ml destilliertem Wasser gelöst und 30 Minuten bei 121˚C autoklaviert.

| | |
|---|---|
| Lösungsmittel: | 49 Gewichtsteile Aceton |
| Emulgator : | 1 Gewichtsteil Alkyl-Aryl-Polyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die erforderliche Stammlösungskonzentration. Um die Testkonzentration zu erreichen wird jeweils 1 Volumenteil der Wirkstoffstammlösung mit 9 Volumenteilen flüssigem Nährboden gründlich vermischt und in Petrischalen gegossen. Ist der Nährboden erkaltet und fest, werden die Platten mit den in der folgenden Tabelle aufgeführten Mikroorganismen beimpft und bei ca. 20˚C inkubiert.

Die Auswertung erfolgt je nach Wachstumsgeschwindigkeit der Mikroorganismen nach 2 bis 8 Tagen. Dabei bedeutet 0% ein Wirkungsgrad, der demjenigen der Kontrolle entspricht, während ein Wirkungsgrad von 100% bedeutet, dass kein Myzelwachstum beobachtet wird.

Aus den nachfolgenden Tabellen geht eindeutig hervor, dass die gefundene Wirkung der erfindungsgemäßen Wirkstoffkombination größer ist als die berechnete, d.h., dass ein synergistischer Effekt vorliegt.

**Tabelle 7: Myzelwachstumstest mit *Phytophthora cactorum* (IC) + Pencycuron**

| Wirkstoff | Wikstoffkonzentration im Nährboden [ppm] | Wirkungsgrad [%] |
|---|---|---|
| (IC) | 100 | 18 |
| Pencycuron | 200 | 0 |
| (IC)+Pencycuron (1:2) | 100+200 | • tatsächlicher Wirkungsgrad: **58**<br>• Erwartungswert, berechnet nach Colby: **18** |

**Tabelle 8: Myzetwachstumstest mit *Pliytophthora cactorum* (IC) + Fosetyl-Al**

| Wirkstoff | Wirkstoffkonzentration im Nährboden [ppm] | Wirkungsgrad [%] |
|---|---|---|
| (IC) | 50 | 7 |
| Fosetyl-Al | 100 | 34 |
| (IC)+Fosetyl-Al (1:2) | 50+100 | • tatsächlicher Wirkungsgrad: **58**<br>• Erwartungswert, berechnet nach Colby: **39** |

**Tabelle 9: Myzelwachstumstest mit *Pliytophthora cactorum* (IC) + Tolylfluanid**

| Wirkstoff | Wirkstoffkonzentration im Nährboden [ppm] | Wirkungsgrad [%] |
|---|---|---|
| (IC) | 100 | 23 |
| Tolylfluanid | 10 | 65 |
| (IC)+Tolylfluanid (1:2) | 100+10 | • tatsächlicher Wirkungsgrad: **92**<br>• Erwartungswert, berechnet nach Colby: **73** |

**Tabelle 10: Mvzelwachstumstest mit *Phytophthora cactorum* (IC) + Trifloxystrobin**

| Wirkstoff Wirkstoffkonzentration | im Nähroden [ppm] | Wirkungsgrad [%] |
|---|---|---|
| (IC) | 100 | 23 |
| Trifloxystrobin | 10 | 29 |
| (IC)+Trifloxystrobin (10:1) | 100+10 | • tatsächlicher Wirkungsgrad: **65**<br>• Erwartungswert, berechnet nach Colby: **45** |

**Tabelle 11: Myzelwachstumstest mit *Phytophthora cactorum* (IC) + Fluoxastrobin**

| Wirkstoff | Wirkstoffkonzentration im Nährboden [ppm] | Wirkungsgrad [%] |
|---|---|---|
| (IC) | 50 | 7 |
| Fluoxastrobin | 5 | 28 |
| (IC) + Fluoxastrobin (10:1) | 50+5 | •tatsächlicher Wirkungsgrad: **58**<br>• Erwartungswert, berechnet nach Colby: **33** |

**Tabelle 12: Myzelwachstumstest mit *Phytophthora cactorum* (IC) + Tebuconazole**

| Wirkstoff | Wirkstoffkonzentration im Nährboden [ppm] | Wirkungsgard [%] |
|---|---|---|
| (IC) | 100 | 23 |
| Tebuconazole | 100 | 12 |
| (IC)+Tebuconazole (1:1) | 100+100 | • tatsächlicher Wirkungsgrad: **88**<br>• Erwartungswert, berechnet nach Colby: **32** |

**Tabelle 13: Myzelwachstumstest mit *Phytophthora cactorum* (IC) + Prochloraz**

| Wirkstoff | Wirkstoffkonzentration im Nährboden [ppm] | Wirkungsgard [%] |
|---|---|---|
| (IC) | 100 | 18 |
| Prochloraz | 50 | 30 |
| (IC)+Prochloraz(2:1) | 100+50 | • tatsächlicher Wirkungsgrad: **85**<br>• Erwartungswert, berechnet nach Colby: **43** |

**Tabelle 14: Myzelwachstumstest mit *Fusarium nivale* (IC) + Fosetyl-Al**

| Wirkstoff | Wirkstoffkonzentration im Nährboden [ppm] | Wirkungsgard [%] |
|---|---|---|
| (IC) | 1 | 15 |
| Fosetyl-Al | 10 | 45 |
| (IC) + Fosetyl-Al (1:10) | 1+10 | •tatsächlicher Wirkungsgrad: **73**<br>• Erwartungswert, berechnet nach Colby: **53** |

**Tabelle 15: Myzelwachstumstest mit *Rhizoctonia solani* (IC) + Fosetvl-Al**

| Wirkstoff | Wirkstoffkonzentration im Nährboden [ppm] | Wirkungsgard [%] |
|---|---|---|
| (IC) | 1 | 0 |
| Fosetyl-Al | 10 | 12 |
| (IC)+Fosetyl-Al (1:10) | 1+10 | • tatsächlicher Wirkungsgrad: **77** |
| | | • Erwartungswert, berechnet nach Colby: **12** |

**Tabelle 16: Myzelwachstumstest mit *Rhizoctonia solani* (IC) + Trifloxystrobin**

| Wirkstoff | Wirkstoffkonzentration im Näbroden [ppm] | Wirkungsgard [%] |
|---|---|---|
| (IC) | 10 | 49 |
| Trifloxystrobin | 1 | 39 |
| (IC) + Trifloxystrobin (10:1) | 10+1 | • tatsächlicher Wirkungsgrad: **86**<br>•Erwartungswert, berechnet nach Colby: **69** |

**Tabelle 17: Myzelwachstumstest mit *Rhizoctonia solani* (IC) + Fluoxastrobin**

| Wirkstoff | Wirkstoffkonzentration im Nährboden [ppm] | Wirkungsgard [%] |
|---|---|---|
| (IC) | 10 | 49 |
| Fluoxastrobin | 1 | 39 |
| (IC) + Fluoxastrobin (10:1) | 10+1 | •tatsächlicher Wirkungsgrad: **80**<br>• Erwartungswert, berechnet nach Colby: **69** |

**Tabelle 18: Myzelwachstumstest mit *Phythium ultimum* (IC) + Iprodione**

| Wirkstoff | Wirkstoffkonzentration im Nährboden [ppm] | Wirkungsgard [%] |
|---|---|---|
| (IC) | 100 | 11 |
| Iprodione | 200 | 9 |
| (IC)+Iprodione(1:2) | 100+200 | • tatsächlicher Wirkungsgrad: **84**<br>• Erwartungswert, berechnet nach Colby: **19** |

**Tabelle 19: Myzelwachstumstest mit *Phythium ultimum* (IC) + Tolylfluanid**

| | Wiekstoff Wirkstoffkonzentration im Nährboden [ppm] | Wirkungsgrad [%] |
|---|---|---|
| (IC) | 100 | 11 |
| Tolylfluanid | 10 | 82 |
| (IC)+Tolylfluanid (10:1) | 100+10 | • tatsächlicher Wirkungsgrad: 99<br>• Erwartungswert, berechnet nach Colby: 84 |

**Tabelle 20: Myzelwachstumstest mit *Phythium ultimum* (IC) + Fluoxastrobin**

| Wirkstoff | Wirkstoffkonzentration im Nährboden [ppm] | Wirkungsgrad [%] |
|---|---|---|
| (IC) | 100 | 31 |
| Fluoxastrobin | 10 | 74 |
| (IC) + Fluoxastrobin (1:2) | 100 + 10 | • tatsächlicher Wirkungsgrad: **93**<br>• Erwartungswert, berechnet nach Colby: **82** |

**Tabelle 21: Myzelwachstumstest mit *Phythium ultimum* (IC) + Tebuconazole**

| | Wirkstoff Wirkstoffkonzentration im Nährboden [ppm] | Wirkungsgrad [%] |
|---|---|---|
| (IC) | 100 | 11 |
| Tebuconazole | 100 | 72 |
| (IC)+Tebuconazole (1:1) | 100+100 | • tatsächlicher Wirkungsgrad: **86** |

(fortgesetzt)

| | Wirkstoff Wirkstoffkonzentration im Nährboden [ppm] | Wirkungsgrad [%] |
|---|---|---|
| | | • Erwartungswert, berechnet nach Colby: **75** |

**Patentansprüche**

1. Synergistische Mittel, **gekennzeichnet durch** den Gehalt an einer Wirkstoffkombination umfassend

(a) einen oder inchrere Wirkstoffe der Formed (I)

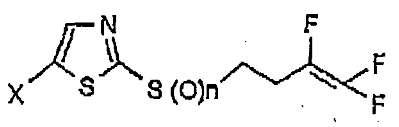

(I)

in welcher
X für Halogen, und
n für 0, 1 oder 2 steht,
und
(b) einen oder mehrere Wirkstoffe aus einer oder verschiedener der folgenden Gruppen (b1) bis (b5) und (b7):

(b1) Tolylfluanid, Carpropamid, Chloraniformethan, Clozylacon, Cyazofamid, Cyflufenamid, Diclocymet, Ethaboxam, Fenoxanil, Flumetover, Furametpyr, Prochloraz, Quinazamid, Silthiofam, Triforine, Benalaxyl, Benalaxyl-M Furalaxyl, Metelaxyl, Metalaxyl-M, Pefurazoate, Benzohydroxamic acid, Tioxymid, Trichlamide; Tricyclamide, Zarilamid, Zoxamide, Cyalafuramid, Furmecyclox, Dichlofluanid, Benthiavalicarb, Iprovalicarb, Benalaxyl, Benalaxyl-M, Boscalid, Carboxin, Fenhexamid, Metalaxyl, Metalaxyl-M. Matsulfovax, Ofurace, Oxadixyl, Oxycarboxin, Fyracarbolid, Thifluzamide, Tiadimil, Benzamilide, Furanilide, Flusulfamide;
(b2) Trifloxystrobin, Fluoxastrobin, Azoxystrobin, Dimoxystrobin, Kresoxim-Methyl, Metominostrobin, Orysastrobin, Picoxystrobin, Pyraclosbrobin;
(b3) Tebuconazole, Prothioconazole, Prochloraz, Climbazole, Clotrimazole Imazalil, Oxpocenazole, Triflumizole, Azaconazole, Bromuconazole, Cyproconazole, Diclobutrazol, Difenoconazole, Dinicunazole, Diniconazole-M, Epoxiconazole, Etaconazole, Fenbuconazole, Fluquinconazole, Flusilazole, Flutriafol, Furconazole, Furoconazole-Cis, Hexaconazole, Imibenconazole, Ipconazole, Metconazole, Myclobutanil, Penconazole, Propiconazole, Quinconazole, Simeconazole, Totraoonazole, Triadimefon, Triadimenol, Triticonazole, Uniconazole, Uniconazole-P.
(b4) Iprodione, Famoxadone, Fluoroimide, Chlozolinate, Dichlozoline, Isovaledione, Myclozolin, Prooymidone, Vinelozolin, Captafol, Captan, Ditalimfos, Folpet, Thiochlorfenphim;
(b5) Fosetyl, Ampropylfos, Ditalimfos, Edifenphos, Bexylthiofos, Iprobenfos, Phosdiphen, Pyrazophos, Tolclofos-Methyl, Triamiphos;
(b7) Pencycuron, Bentaluron, Quinazamid;
oder den Wirkstoff Fludioxonil.

2. Synergistische Mittel gemäß Anspruch 1, worin die Benzanilide der Gruppe (b1) gewählt sind aus Benodanil, Flutolanil, Mebenil, Mepronil, Salicylanilid und Tecloflalam.

3. Synergistische Mittel gemäß Anspruch 1 oder 2, worin die Furanilide der Gruppe (b1) gewählt sind aus Fenfuram, Furalaxyl, Furcarballil und Methfuroxam.

4. Synergistische Mittel gemäß Anspruch 1, **dadurch gekennzeichnet, dass** sie eine oder mehrere Verbindungen der Formel (I) umfassen, in denen
X für Fluor, Chlor oder Brom steht, und

n für 0 oder 2 steht.

5. Synergistische Mittel gemäß Anspruch 1, **dadurch** gekermzeichnet, dass sie eine oder mehrere Verbindungen der Formel (I) unfassen, in denen
X für Fluor oder Chlor steht, und
n für 2 steht.

6. Synergistische Mittel gemäß Anspruch 1, **dadurch gekennzeichnet, dass** sie als Wirkstoffe der Gruppe 1 eine der folgenden Verbindungen der Formel (IA), (IB) oder (IC)

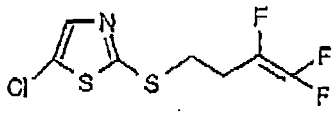 (IA) 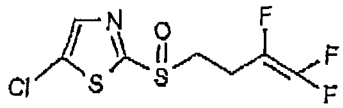 (IB)

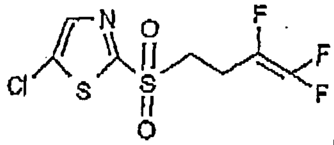

(IC)

umfassen.

7. Synergistische Mittel gemäß Anspruch 1, **dadurch gekennzeichnet, dass** sie als Wirkstoff der Gruppe 1 die Verbindungen der Formel (IC) umfassen.

8. Verwendung von Mitteln gemäß einem der Ansprüche 1 bis 7 für die Herstellung von fungiziden, nematoziden, insektiziden und/oder akariziden Mitteln zur Bekämpfung von Pilzen, Nematoden, Insekten und/oder Akariden.

9. Verfahren zur Bekämpfung von Pilzen, Nematoden, Insekten und Akariden in Pflanzen, Pflanz- und Saatgut und im Boden sowie zum Materialschutz,
**dadurch**
**gekennzeichnet, dass** man Mischungen gemäß einem der Ansprüche 1 bis 7 auf Pilze und/oder Nematoden und/oder Insekted und/oder Akariden und/oder deren Lebensraum ein wirken läßt.

10. Verfahren zur Herstellung von fungiziden, nematiziden, insektiziden und/oder fungiziden Mitteln, **dadurch gekennzeichnet, dass** man Mischungen gemäß einem der Ansprüche 1 bis 7 mit Streckmitteln und/oder oberflächenaktiven Stoffen vermischt.

11. Die synergistische Zusammensetung gemäß Anspruch 6,
worin der eine oder mehrere Wikstoff(e) aus Untergruppen von (b) gewählt sind aus der Gruppe bestehend aus : Prothioconazol, Fludioxonil, Trifloxystrobin, Pencycuron , Fosetyl-Al, Tolyfluanid, Fluoxastrobin, Tebuconazol, Prochloraz
und Iprodion.

## Claims

1. Synergistic means, **characterized by** the content of an active ingredient combination comprising

   (a) one or more active ingredients of Formula (I)

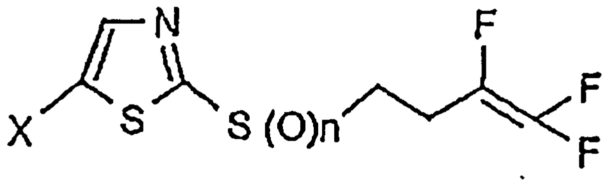

(I)

wherein
X represents halogen, and
n represents 0, 1 or 2,
and
(b) one or more active ingredients from one or various of the following groups (b1) to (b5) and (b7):

(b1) tolylfluamide, carpropamide, chloraniformethane, clozylacone, cyazofamide, cyflufenamide, diclocymet, ethaboxam, fenoxanil, flumetover, furametpyr, prochloraz, quinazamid, silthiofam, triforine, benalaxyl, benalaxyl-M furalaxyl, metalaxyl, metalaxyl-M, perfurazoate, benzohydroxamic acid, tioxymid, trichlamide, tricyclamide, zarilamid, zoxamide, cyclafuramid, furmecyclox, dichlofluanid, benthiavalicarb, iprovalicarb, benalaxyl, benalaxyl-M, boscalid, carboxin, fenhexamid, metalaxyl, metalaxyl-M, metsulfovax, ofurace, oxadixyl, oxycarboxin, pyracarbolid, thifluzamide, tiadimil, benzanilide, fluranilide, flusulfamide;
(b2) trifloxystrobin, fluoxastrobin, azoxystrobin, dimoxystrobin, kresoxim-methyl, metominostrobin, orysastrobin, picoxystrobin, pyraclostrobin;
(b3) tebuconazole, prothioconazole, prochloraz, climbazole, clotrimazole imazalil, oxpoconazole, triflumizole, azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, metconazole, myclobutanil, penconazole, propiconazole, quinconazole, simeconazole, tetraconazole, triadimefon, triadimenol, triticonazole, uniconazole, uniconazole-P.
(b4) iprodione, famoxadone, fluoroimide, chlozolinate, dichlozoline, isovaledione, myclozolin, prosymidone, vinclozolin, captafol, captan, ditalimfos, folpet, thiochlorfenphim;
(b5) fosetyl, ampropylfos, ditalimfos, edifenphos, hexylthiofos, iprobenfos, phosdiphen, pyrazophos, tolclofos-methyl, triamiphos;
(b7) pencycuron, bentaluron, quinazamid
or the active ingredient fludioxonil.

2. Synergistic means according to Claim 1, wherein the benzanilides of group (b1) are selected from benodanil, flutolanil, mebenil, mepronil, salicylanilide and tecloftalam.

3. Synergistic means according to Claim 1 or 2, wherein the furanilides of group (b1) are selected from fenfuram, furalaxyl, furcarbanil and methfuroxam.

4. Synergistic means according to Claim 1, **characterized by** comprising one or more compounds of Formula (I), wherein
X represents fluorine, chlorine or bromine, and
n represents 0 or 2.

5. Synergistic means according to Claim 1, **characterized by** comprising one or more compounds of Formula (I), wherein
X represents fluorine or chlorine, and
n represents 2.

6. Synergistic means according to Claim 1, **characterized by** comprising, as active ingredients of group 1, one of the following compounds of Formula (IA), (IB) or (IC).

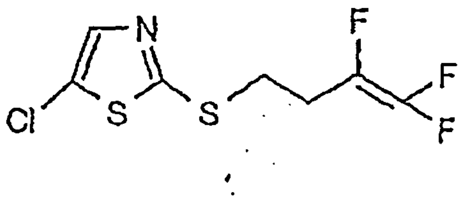 (IA) 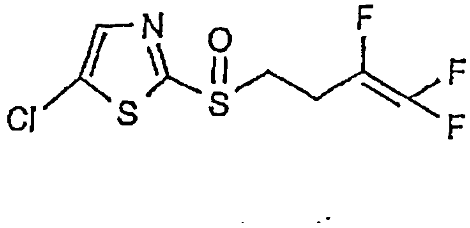 (IB)

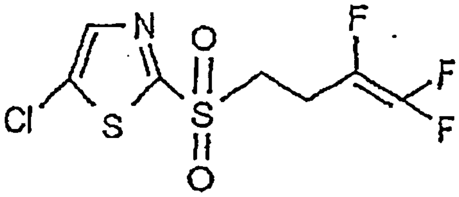

(IC)

7. Synergistic means according to Claim 1, **characterized by** comprising, as an active ingredient of group 1, the compounds of Formula (IC).

8. Use of means according to one of Claims 1 through 7 for the production of fungicidal, nematocidal, insecticidal and/or acaricidal means for fighting fungi, nematodes, insects and/or acarids.

9. Method for fighting fungi, nematodes, insects and acarids in plants, seed stock and seeds and in the soil as well as for the protection of material,
**characterized in that** fungi and/or nematodes and/or insects and/or acarids and/or their habitat are exposed to mixtures according to one of Claims 1 through 7.

10. Method for producing fungicidal, nematocidal, insecticidal and/or fungicidal means, **characterized in that** mixtures according to one of Claims 1 through 7 are mixed with extenders and/or surfactants.

11. The synergistic composition according to Claim 6, wherein the one or more active ingredient(s) from subgroups of (b) are selected from the group consisting of: prothioconazol, fludioxonil, trifloxystrobin, pencycuron, Fosetyl-Al, tolyfluanid, fluoxastrobin, tebuconazol, prochloraz and iprodion.

## Revendications

1. Agents synergiques, **caractérisés par** la teneur en une combinaison de substances actives comprenant

(a) un ou plusieurs principes actifs de formule (I)

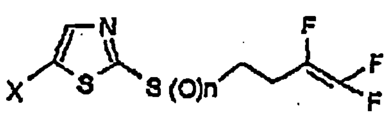 (I)

dans laquelle
X représente un halogène et
n représente 0, 1 ou 2.
et
(b) un ou plusieurs principes actifs d'un ou de plusieurs des groupes suivants (b1) à (b5) et (b7) :

(b1) Tolylfluanid, carproparnid, chloraniforméthane, clozylacone, cyazofamide, cyflufénamide, diclocymète, éthaboxame, fénoxanile, flumétover, furametpyr, prochloraze, quinazamide, silthiofam, triforine, bénalaxyl, bénalaxyl-M, furalaxyle, métalaxyl, métalaxyl-M, péfurazoate, acide benzohydroxamique, tioxymid, trichlamide, tricyclamide, zarilamide, zoxamide, cyclafuramide, furmecyclox, dichlofluanide, benthiavalicarbe, iprovalicarb, bénalaxyl, bénalaxyl-M, boscalide, carboxine, fenhexamide, métalaxyle, métalaxyle-M, metsulfovax, ofurace, oxadixyle, oxycarboxine, pyracarbolide, thifluzamide, tiadinil, benzanilide, furanilide, flusulfamide ;
(b2) trifloxystrobine, fluoxastrobine, azoxystrobine, dimoxystrobine, krésoxime-méthyle, métominostrobine, orysastrobine, picoxystrobine, pyraclostrobine,
(b3) tébuconazole, prothioconazole, prochloraze, climbazole, clotrimazole, imazalil, oxpoconazole, triflumizole, azaconazole, bromuconazole, cyproconazole, diclobutrazole, difénoconazole, diniconazole, diniconazole-M, époxyconazole, étaconazole, fenbuconazole, fluquinconazole, flusilazole, flutriafol, furconazole, cis-furconazole, hexaconazole, imibenconazole, ipconazole, metconazole, myclobutanile, penconazole, propiconazole, quinconazole, siméconazole, tétraconazole, triadiméfone, triadiménol, triticonazole, uniconazole, uniconazole-P ;
(b4) iprodione, famoxadone, fluoroimède chlozolinate, dichlozoline, isovalédione, myclozoline, procymidone, vinclozoline, captafol, captane, ditalimfos, folpet, thiochlorfenphim ;
(b5) fosétyle, ampropylfos, ditalimfos, édifenphos, hexylthiophos, iprobenfos, phosdiphène, pyrazophos, tolclofos-méthyl, triamiphos ;
(b7) pencyeuron, bentaluron, quinazamide ;
ou le principe actif fludioxonile.

2. Agents synergiques selon la revendication 1, dans lequels les benzanilides du groupe (b1) sont choisis parmi le bénodanil, le flutolanile, le mébénile, le mépronile, le salicylanilide et le tecloftalame.

3. Agents synergiques selon la revendication 1 ou 2, dans lequels les furanilides du groupe (b1) sont choisis parmi le fenfurame, le furalaxyle, le furcarbanile et le méthfuroxame.

4. Agents synergiques selon la revendication 1, **caractérisés en ce qu'**ils comportent un ou plusieurs composés de formule (I), dans lesquels
X représente un fluor, un chlore ou un brome, et n représente 0 ou 2.

5. Agents synergiques selon la revendication 1, **caractérisés en ce qu'**ils comportent un ou plusieurs composés de formule (I), dans lesquels
X représente un fluor ou un chlore, et
n représente 2.

6. Agents synergiques selon la revendication 1, **caractérisés en ce qu'**ils comprennent comme principes actifs du groupe 1 un des composés suivants de formule (IA), (IB) ou (IC) :

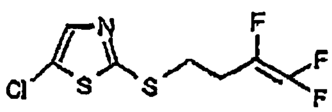 (IA) 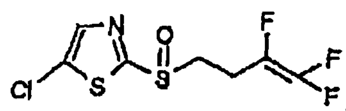 (IB)

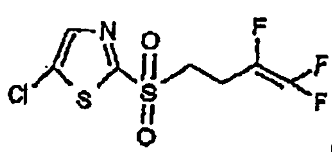

(IC)

7. Agents synergiques selon la revendication 1, **caractérisés en ce qu'**ils comprennent comme principe actif du groupe 1 les composés de formule (IC).

8. Utilisation d'agents selon l'une quelconque des revendications 1 à 7 pour la préparation de agents fongicides,

nématocides, insecticides et/ou acaricides pour la lutte contre des champignons, des nématodes, des insectes et/ou des acariens.

9. Procédé de lutte contre des champignons, des nématodes, des insectes et des acariens dans des plantes, des plantes à repiquer et des semences, et dans le sol, ainsi que pour la protection de matériaux, **caractérisé en ce que** l'on fait agir des mélanges selon l'une quelconque des revendications 1 à 7 sur des champignons et/ou des nématodes et/ou des insectes et/ou des acariens, et/ou sur leur habitat.

10. Procédé de préparation de agents fongicides, nématocides, insecticides et/ou fongicides, **caractérisé en ce que** l'on mélange des mélanges selon l'une quelconque des revendications 1 à 7 à des diluants et/ou à des tensioactifs.

11. Composition synergique selon la revendication 6, dans laquelle le seul ou les plusieurs principes actifs des sous-groupes de (b) est / sont choisi(s) parmi le groupe consistant en : la prothioconazole, le fludioxonile, la trifloxystrobine, la pencycurone, le fosetyl-Al, le tolyfluanide, la fluoxastrobine, la tébuconazole, le prochloraze et l'iprodione.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0102378 A1


### In der Beschreibung aufgeführte Nicht-Patentliteratur


- **K.H. Büchel.** Pflanzenschutz und Schädlingsbekämpfung. Georg Thieme Verlag, 1977, 87, 136, 141, 146-153
- The Pesticide Manual. British Crop Protection Council, 1997
- **Colby, S.R.** Calculating Synergistic and Antagonistic Responses of Herbicide Combinations. *Weeds,* 1967, vol. 15, 20-22